# EUROPÄISCHE PATENTSCHRIFT

(11) **EP 1 933 173 B1**
(45) Veröffentlichungstag und Bekanntmachung des Hinweises auf die Patenterteilung: **18.09.2013**
(21) Anmeldenummer: 07022597.4
(22) Anmeldetag: 21.11.2007
(51) Int. Cl.: G01V 8/20

(54) **Lichtgitter**
Light grid
Barrière lumineuse

(30) Priorität: 15.12.2006 DE 102006059370
(43) Veröffentlichungstag der Anmeldung: 18.06.2008
(73) Patentinhaber: SICK AG, 79183 Waldkirch (DE)
(72) Erfinder: Torabi, Bahram, Dr.-Ing., 79100 Freiburg (DE)
(74) Vertreter: Manitz, Finsterwald & Partner GbR

(56) Entgegenhaltungen:
- DE-A1- 4 422 497
- DE-A1- 10 355 008
- DE-C1- 19 510 304
- DE-C1- 19 601 661
- DE-U1- 8 814 954

## Beschreibung

Die vorliegende Erfindung betrifft ein Verfahren zur störungsfreien Synchronisation von Lichtempfängern und Lichtsendern eines Lichtgitters zur Erfassung von Objekten in einem Überwachungsbereich mit mehreren nebeneinander angeordneten Lichtsendern und mehreren nebeneinander angeordneten Lichtempfängern, wobei je ein Lichtsender und je ein Lichtempfänger einander zugeordnet sind und die Lichtsender zur Abgabe von Lichtimpulsen in einer Reihenfolge, die durch ein Sendemuster vorgegeben ist, aktiviert werden. Ferner betrifft die Erfindung ein derartiges Lichtgitter.

Lichtgitter der genannten Art finden beispielsweise in der Fabrikautomation Anwendung, bei der Werkstücke in Bearbeitungs- oder Transporteinrichtungen zuverlässig erkannt werden müssen. Weiterhin werden Lichtgitter im Bereich des Unfallschutzes eingesetzt. Dabei soll beispielsweise das Bedienungspersonal vor einem unzulässigen Eindringen in einen Gefahrenbereich geschützt werden.

Es ist bei Lichtgittern nach dem Stand der Technik üblich, nicht alle Lichtsender und Lichtempfänger eines Lichtgitters gleichzeitig zu betreiben, sondern jeweils einander zugeordnete Paare von Lichtsendern und Lichtempfängern einzeln zu aktivieren, um einen störungsfreien Betrieb des Lichtgitters zu gewährleisten und insbesondere ein Übersprechen eines von einem bestimmten Lichtsender ausgesandten Lichtsignals auf einen dem eigentlich zugeordneten Lichtempfänger benachbarten Lichtempfänger zu vermeiden. Daraus ergibt sich die Notwendigkeit, die üblicherweise zu einer Sendeeinheit und einer Empfangseinheit zusammengefassten Lichtsender bzw. Lichtempfänger derart zu synchronisieren, dass bei Aussendung eines Lichtimpulses durch einen Lichtsender immer nur sein jeweils zugeordneter Lichtempfänger aktiv ist.

Bei aus dem Stand der Technik bekannten Lichtgittern erfolgt häufig die Synchronisation über einen zusätzlichen Synchronisationskanal, beispielsweise über eine elektrische Verbindungsleitung zwischen der Lichtsender- und Lichtempfängereinheit oder über Funk. Gemäß DE 100 33 077 A1 kann das Synchronisationssignal auch über einen Lichtleiter übertragen werden.

DE 38 03 033 C2 offenbart ein Lichtgitter, bei dem die Synchronisation auf optischem Wege über die gepulst betriebenen Lichtsender und - empfänger erfolgt, wobei im Ansteuerungszyklus der Lichtquellen Synchronisierpausen vorgegeben sind. Dadurch kann eine Leitungsverbindung zwischen Sende- und Empfangseinheit oder ein separater optischer Synchronisationskanal entfallen.

DE 44 22 497 A1 offenbart einen Distanzsensor, bei dem zur Ermittlung einer Distanz eines Gegenstandes von dem Distanzsensor eine Phasendifferenz zwischen dem amplitudenmodulierten Sendelichtstrahl und dem ebenfalls amplitudenmodulierten Empfangslichtstrahl ermittelt wird. Weiter ist ein Lichtgitter offenbart, bei dem gegenüberliegende Sender-/Empfängerpaare über Schieberegister nacheinander aktiviert werden, um ein Übersprechen von Sendelicht auf benachbarte Empfänger zu vermeiden.

DE 196 01 661 C1 betrifft einen Sensor zur Erfassung von Objekten, bei dem ein Überwachungsbereich mittels einer Ablenkeinheit abgetastet wird. Eine Entfernungsmessung erfolgt nach dem Phasenmessprinzip.

Aus DE 88 14 954 U1 ist ein Lichtvorhang mit mehreren Sendern und Empfängern bekannt, bei dem die Sender zyklisch mit einer vorbestimmten Folge von Bildmustern angesteuert werden. Wird am Empfänger eine abweichende Folge von Bildmustern detektiert, so wird ein Sicherheitssignal erzeugt.

Aufgabe der Erfindung ist es, ein Verfahren zum Betrieb eines Lichtgitters ohne direkte Leitungsverbindung zwischen einer Sendeeinheit und einer Empfangseinheit zu schaffen, welches bei einfachem Aufbau und zuverlässiger Funktion insbesondere bei einer Unterbrechung einer optischen Synchronisationsverbindung, beispielsweise durch ein in den Überwachungsbereich einfahrendes Werkstück, eine störungsfreie Synchronisation von Lichtempfängern und Lichtsendern gewährleistet.

Die Aufgabe wird erfindungsgemäß durch ein Verfahren gemäß den Merkmalen des Anspruchs 1, eine Vorrichtung gemäß den Merkmalen des Anspruchs 9 und insbesondere dadurch gelöst, dass ein von N Lichtempfängern geliefertes Empfangsmuster mit einem Referenzmuster, das gleich dem Sendemuster der den N Lichtempfängern zugeordneten Lichtsender ist oder von diesem Sendemuster abgeleitet ist, korreliert und aus dem Ergebnis dieser Korrelation die Phasenverschiebung zwischen Referenzmuster und Empfangsmuster berechnet wird.

Aufgrund dieser Ausbildung können besondere Leitungsverbindungen zwischen den üblicherweise zu einer Sendeleiste und einer Empfangsleiste zusammengefassten Lichtsendern bzw. Lichtempfängern entfallen, was insbesondere dann vorteilhaft ist, wenn die Sendeeinheit und die Empfangseinheit auf gegenüberliegenden Seiten eines zu überwachenden Bereichs angeordnet sind, und eine Leitungsverbindung zwischen beiden stören würde. Auch in räumlich weniger problematischen Anordnungen verringert die leitungslose Synchronisation die Anfälligkeit gegenüber Störungen, wie beispielsweise mechanischen Beschädigungen der Verbindungsleitung.

Das erfindungsgemäße Verfahren ermöglicht in besonders vorteilhafter Weise auch dann eine zuverlässige Synchronisation, wenn Störungen im Strahlengang zwischen Sendeeinheit und Empfangseinheit oder eine Einwirkung von Fremdlicht auf einzelne Empfänger auftreten. Auch wenn derartige Störeinflüsse im Empfangsmuster vorhanden sind, ist das Ergebnis der Korrelation in den allermeisten Fällen ausreichend genau, um die Phasenverschiebung zwischen Empfangs- und Referenzmuster zu ermitteln. Zu dem Zweck wird das Signal einer Anzahl von N Lichtempfängern herangezogen, wobei N die Gesamtmenge der Lichtempfänger oder eine Teilmenge davon ist. In der Berücksichtigung von mehr als einem Empfangssignal bei einem einzelnen Synchronisationsvorgang liegt dabei ein wesentlicher Unterschied gegenüber bekannten Verfahren und Vorrichtungen. Da erfindungsgemäß also mehr Information als bisher üblich für einen Synchronisationsvorgang herangezogen wird, lässt sich eine Synchronisierung genauer und zuverlässiger durchführen.

Das Sendemuster definiert erfindungsgemäß die vorgegebene Dauer und Abfolge der gepulsten Aktivierung der N Lichtsender innerhalb eines Taktzyklus und wird zyklisch in einem getakteten Sendemustergenerator gemäß einem dort hinterlegten Abfolgemuster erzeugt. Dieses Abfolgemuster ist ebenfalls in einem getakteten Referenzmustergenerator hinterlegt, der fortlaufend auf der Grundlage des hinterlegten Abfolgemusters ein zyklisches Referenzmuster mit gleicher Zyklusdauer wie der Sendemusterzyklus erzeugt. Das Referenzmuster ist gleich diesem Sendemuster oder mittels einer sinnvollen mathematischen Funktion, beispielsweise durch Berechnung des Differentials, daraus ableitbar. Da das Einschalten des Sende- und Referenzgenerators in der Regel nicht gleichzeitig erfolgt und somit die Erzeugung von Sendemuster und Referenzmuster nicht zwingend zum gleichen Zeitpunkt beginnt, besteht zwischen ihnen eine Phasenverschiebung.

Unter der Annahme einer idealen, störungsfreien Lichtübertragung wird mittels der Lichtsender in der Empfangseinheit ein zum Sendemuster synchrones Empfangsmuster erzeugt. Durch eine Korrelation eines während eines bestimmten Zeitraums empfangenen Empfangsmusters mit dem im gleichen Zeitraum erzeugten Referenzmuster wird nun die zwischen diesen bestehende Phasenverschiebung berechnet, die aufgrund der Synchronizität zwischen Sende- und Empfangsmuster gleich der Phasenverschiebung zwischen Sendemuster und Referenzmuster ist.

Es soll erwähnt werden, dass die Annahme einer idealen, störungsfreien Lichtübertragung nur dem besseren Verständnis des Verfahrens dient. Im realen Betrieb ist es im Gegensatz dazu eine wesentliche Eigenschaft des erfindungsgemäßen Verfahrens, dass mit dem hier eingesetzten Korrelationsverfahren aufgrund einer Redundanz der zur Synchronisation herangezogenen Informationen auch dann eine Ermittelung der Phasenverschiebung möglich ist, wenn das Empfangsmuster nicht exakt dem Referenzmuster entspricht, weil es beispielsweise durch externe Störungen wie Störlicht oder kurzzeitige Unterbrechungen im Strahlengang verfälscht wurde.

Aus der durch das Korrelationsverfahren ermittelten Abweichung zwischen Empfangs- und Referenzmuster, die über die durch die Phasenverschiebung bedingte Abweichung hinausgeht, lassen sich ferner Zusatzinformationen ermitteln. Zum Beispiel kann daraus eine Information über den Grad von Störlicht gewonnen werden, welches zusätzlich zu den Lichtsignalen auf den Empfänger trifft.

Da die Phasenverschiebung unmittelbar nach der Inbetriebnahme des Lichtgitters noch nicht bekannt ist, ist eine Zuordnung eines von einem bestirrimten Lichtempfänger empfangenen Lichtsignals zu einem Lichtsender zunächst nicht möglich, d.h. eine Aussage, ob der einem bestimmten Lichtempfänger zugeordnete Lichtsender zum Zeitpunkt des Signalempfangs tatsächlich aktiv ist, kann noch nicht getroffen werden. Damit ist eine Auswertung der Empfangssignale, mit der eine zuverlässige Aussage über sich im Lichtübertragungsweg befindliche Hindernisse getroffen werden soll, zu diesem Zeitpunkt noch nicht sinnvoll.

Erst nach erstmaliger und erfindungsgemäß nur eine sehr kurze Zeitspanne beanspruchenden Ermittlung der Phasenverschiebung kann sichergestellt werden, dass der dem betreffenden Lichtsender zugeordnete Lichtempfänger zum Zweck der Auswertung nur genau dann berücksichtigt wird, wenn dort bei ungestörtem Lichtweg ein Lichtempfang erwartet wird. Die Auswertung und Erzeugung eines Ausgangssignals kann beispielsweise in einer Auswerteeinheit dadurch erfolgen, dass kontinuierlich das Empfangsmuster mit dem um den Betrag der ermittelten Phasenverschiebung zeitverschobenen Referenzmuster verglichen wird, was im Rahmen der Figurenbeschreibung noch näher erläutert ist.

In einer bevorzugten Ausführungsform werden die N Lichtempfänger nacheinander abgetastet. Hierbei muss eine den Lichtempfängern unmittelbar nachgeordnete Signalverarbeitungseinheit nur einmal vorhanden sein, was eine kostengünstige Fertigung eines solchen Lichtgitters erlaubt.

Hierbei erweist es sich als besonders vorteilhaft, wenn eine Abtastwiederholrate für die Lichtempfänger erzeugt wird, die zumindest ein Vielfaches, insbesondere ein N-faches einer Sendeimpulsrate beträgt. Dadurch wird gewährleistet, dass während der Dauer eines von einem einzelnen Sender erzeugten Lichtimpulses bevorzugt alle, insbesondere die N Lichtempfänger abgetastet bzw. auf einen Lichtempfang hin überprüft werden. Durch dieses so genannte "Oversampling" wird eine möglichst verlustfreie Signalerfassung aller Lichtimpulse erreicht und sichergestellt, dass praktisch ständig alle bzw. die N Lichtempfänger abgefragt werden, so dass ein komplettes Empfangsmuster für die durchzuführende Korrelation vorliegt. Dabei ist zu berücksichtigen, dass trotz dieser quasi ständigen Abfrage aller bzw. der N Lichtempfänger nach erfolgter Synchronisierung im Rahmen der eigentlichen Auswertung nur derjenige Lichtempfänger betrachtet wird, der einem gerade sendenden Lichtsender zugeordnet ist.

Bei einer anderen bevorzugten Ausführungsform werden mehrere, insbesondere alle, der N Lichtempfänger gleichzeitig abgetastet. Hierdurch wird letztlich der gleiche Effekt erreicht, wie durch das vorstehend erläuterte "Oversampling", nur dass das Abtasten der Lichtempfänger nicht mit hoher Abtastrate nacheinander, sondern gleichzeitig erfolgt. Vorteilhafterweise wird bei diesem gleichzeitigen Abtasten eine Abtastrate für die Lichtempfänger erzeugt, die gleich der Sendeimpulsrate ist. Dies bedeutet, dass bei jeder Lichtsignalaussendung durch einen beliebigen Lichtsender immer alle bzw. die N Lichtempfänger gleichzeitig abgetastet bzw. auf einen Lichtempfang hin überprüft werden.

Bevorzugt werden die Abtastrate und die Sendeimpulsrate aus einer jeweils gleichen Taktfrequenz erzeugt. Dazu werden z.B. in der Sendeleiste und in der Empfangsleiste jeweils separate Taktgeneratoren mit Schwingquarzen gleicher Frequenz für die Erzeugung von Sendemuster und Referenzmuster verwendet. Hierdurch werden ein größtmöglicher Gleichlauf der Taktgeneratoren und damit eine größtmögliche Konstanz der Phasenverschiebung zwischen Referenzmuster und Sende- bzw. Erripfangsmuster erreicht. Nachdem die Synchronisation einmal hergestellt wurde, muss dann in der Regel nur eine durch eine Änderung der Phasenverschiebung über einen Zeitraum verursachte Fehlsynchronisation, die beispielsweise durch eine geringfügige Abweichung der Taktfrequenzen der Schwingquarze in den Taktgeneratoren verursacht wird, in relativ großen Abständen korrigiert werden. Dies erlaubt die Verwendung auch weniger leistungsfähiger Vorrichtungen zur Korrelationsberechnung oder die Überbrückung längerer Unterbrechungen einer Großzahl von Lichtwegen, bei denen die Berechnung der Phasenverschiebung aus der Korrelationsfunktion keine zuverlässigen Resultate mehr liefert.

Auch bei einer Anwendung des Oversamplings, d.h. wenn die Abtastrate ein Vielfaches der Sendeimpulsrate beträgt, ist die Verwendung gleicher Basis-Taktfrequenzen für die Sendeimpulsrate und die Abtastrate sinnvoll, da auch höhere oder niedrigere Raten mit einem genau bestimmbaren Verhältnis zur ursprünglichen Taktfrequenz ableitbar sind. Besonders bevorzugt ist, es wenn die Abtastrate das N-fache der Sendeimpulsrate beträgt, da dann bei der Aussendung jedes Lichtimpulses alle N Lichtempfänger genau einmal auf einen Lichtempfang abgefragt werden können.

In einer weiteren bevorzugten Ausführungsform werden Empfangsmuster und Referenzmuster kontinuierlich, insbesondere für jeden die N Lichtempfänger umfassenden Taktzyklus, korreliert und deren Phasenverschiebung berechnet. Durch eine kontinuierliche Synchronisation werden etwaige Störungen in der Überwachung durch einen asynchronen Betrieb von Sende- und Empfangseinheit praktisch vollständig vermieden.

Alternativ können bei einer weniger bevorzugten Ausführungsform Empfangsmuster und Referenzmuster nur bei jedem n-ten Taktzyklus korreliert werden.

Es können für die Korrelationsberechnung auch mehrere Taktzyklen zu einer Folge zusammengefasst werden. Dies ist beispielsweise dann sinnvoll, wenn nur eine geringe Anzahl von Lichtempfängern eingesetzt wird und dennoch eine zuverlässige, von Störungen nicht beeinträchtigte Korrelation erwünscht ist.

Zweckmäßigerweise werden als Sendemuster, Referenzmuster und Empfangsmuster jeweils zweidimensionale Muster eingesetzt, wobei als erste Dimension die Zeit und als zweite Dimension eine Ordnungsnummer der für die Korrelationsfunktion herangezogenen N Lichtsender bzw. N Lichtempfänger verwendet werden. Dadurch können aus der Bildverarbeitung bekannte Algorithmen zur Berechnung der Korrelationsfunktion oder eine entsprechend optimierte, elektronische Schaltung verwendet werden, wodurch die für die Datenverarbeitung notwendige Rechenzeit auf ein Minimum reduziert werden kann. Dies ermöglicht das Betreiben des Lichtgitters mit einer größtmöglichen Sendeimpulsrate.

Die der Erfindung zugrunde liegende Aufgabe wird ferner dadurch gelöst, dass ein Lichtgitter mit mehreren nebeneinander angeordneten Lichtsendern und mehreren nebeneinander angeordneten Lichtempfängern vorgesehen ist, wobei je ein Lichtsender und je ein Lichtempfänger einander zugeordnet sind und die Lichtsender zur Abgabe von Lichtimpulsen in einer Reihenfolge, die durch ein Sendemuster vorgegeben ist, aktivierbar sind. Dabei ist mittels einer Auswerteeinheit ein von N Lichtempfängern geliefertes Empfangsmuster mit einem Referenzmuster, das gleich dem Sendemuster der den N Lichtempfängern zugeordneten Lichtsendern ist oder von diesem Sendemuster ableitbar ist, korrelierbar. Aus dem Ergebnis dieser Korrelation ist dann die Phasenverschiebung zwischen Referenzmuster und Empfangsmuster berechenbar.

Vorzugsweise ist zur Verarbeitung der Signale aller Lichtempfänger eine einzelne Auswerteeinheit vorgesehen. Da damit der Schaltungsaufwand für jeden einzelnen Lichtempfänger niedrig gehalten wird, sind auch Lichtgitter mit einer größeren Anzahl an Lichtsender-/ empfängerpaaren kostengünstig herzustellen.

Vorteilhaft ist es, wenn die Auswerteeinheit zumindest eine Vorrichtung zur Bildverarbeitung ist. Solche Vorrichtungen sind als auf hohe Rechenleistung optimierte, vorgefertigte elektronische Komponenten kommerziell verfügbar und verringern damit den Entwicklungs- und Fertigungsaufwand für ein erfindungsgemäßes Lichtgitter.

Weitere vorteilhafte Ausführungsformen der Erfindung sind in den Unteransprüchen genannt.

Die Erfindung wird nachfolgend anhand eines Ausführungsbeispiels unter Bezugnahme auf die Zeichnungen erläutert; in diesen zeigen:
- Fig. 1: eine schematische Ansicht eines Lichtgitters, und
- Fig. 2: eine schematische Darstellung von Sende-, Referenz- und Empfangsmuster.

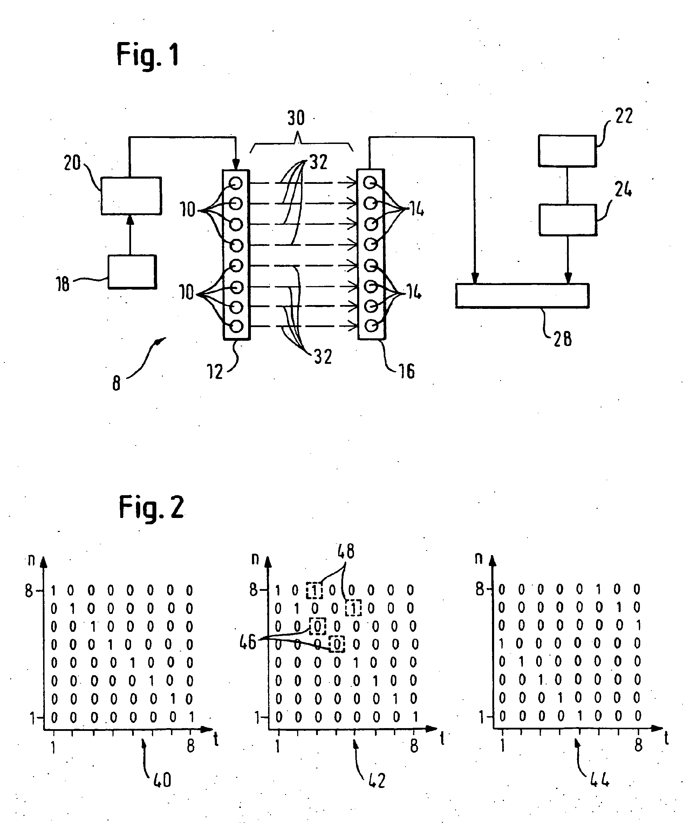

In Fig. 1 ist ein Lichtgitter 8 dargestellt, das acht nebeneinander angeordnete, zu einer Sendeeinheit bzw. Sendeleiste 12 zusammengefasste Lichtsender 10 und acht nebeneinander angeordnete, zu einer Empfangseinheit bzw. Empfangsleiste 16 zusammengefasste Lichtsender 14 umfasst. Mittels eines Sendetaktgenerators 18 wird in einem Sendemustergenerator 20 ein Sendemuster 40 gemäß Fig. 2 erzeugt, bei dem auf einer waagerechten Achse die Zeit t und auf einer senkrechten Achse die Ordnungsnummer n aller acht Lichtsender 10 der Sendeeinheit 12 aufgetragen ist. Die Zahlen 0 und 1 geben den Zustand eines bestimmten Lichtsenders n zu einem Zeitpunkt t an, wobei 0 dem deaktivierten Zustand und 1 dem aktivierten Zustand, in dem ein Lichtsignal ausgesandt wird, entspricht. Ein ausgesandtes Lichtsignal kann die Form eines Einzelpulses, aber auch die eines Mehrfachpulses aufweisen.
Die Lichtsender 14 werden in einer durch das Sendemuster 40 vorgegebenen Abfolge aktiviert bzw. deaktiviert, wobei die Ausdehnung des Sendemusters 40 in Richtung der t-Achse der Länge eines Taktzyklus entspricht, in dem alle Lichtsender 14 der Sendeeinheit 12b jeweils einmal aktiviert werden.

Die Empfangseinheit 16 ist der Sendeeinheit 12 gegenüberliegend angeordnet, so dass sich zwischen beiden der Überwachungsbereich 30 erstreckt. Die Strahlengänge 32 zwischen einander zugeordneten Lichtsendern 10 und Lichtempfängern 14 sind als gestrichelte Linien dargestellt, wobei die Ausbreitungsrichtung des Lichts durch die Pfeilspitzen angegeben ist.

Mittels eines Referenztaktgenerators 22 wird in einem Referenzmustergenerator 24 ein Referenzmuster 44 gemäß Fig. 2 erzeugt, bei dem auf einer waagerechten Achse die Zeit t und auf einer senkrechten Achse die Ordnungsnummer n aller acht Lichtempfänger 14 aufgetragen sind, wobei jeweils die Ordnungsnummer eines Lichtempfängers 14 gleich der Ordnungsnummer des ihm zugeordneten Lichtsenders 10 ist. Die Zahlen 0 und 1 geben den Soll-Empfangszustand eines bestimmten Lichtempfängers n zu einem Zeitpunkt t an, wobei 0 bedeutet, dass kein Lichtsignal empfangen wird, und 1 bedeutet, dass ein Lichtsignal empfangen wird, entspricht und die Ausdehnung des Referenzmusters 44 in Richtung der t-Achse der durch das Sendemuster 40 vorgegebenen Länge eines Taktzyklus entspricht.

In einer Auswerteeinheit 28 wird die Korrelationsfunktion zwischen dem Referenzmuster 44 und einem in Fig. 2 dargestellten Empfangsmuster 42 berechnet, das während des Taktzyklus des Referenzmusters 44 von der Empfangseinheit 16 erfasst wird. Die Achsen des Empfangsmusters 42 sind entsprechend dem Referenzmuster 44 zugeordnet. Die Zahlen 0 und 1 geben den Ist-Empfangszustand eines bestimmten Lichtempfängers n zu einem Zeitpunkt t an, wobei 0 bedeutet, dass kein Lichtsignal empfangen wird, und 1 bedeutet, dass ein Lichtsignal empfangen wird. Im Empfangsmuster 42 sind an zwei Positionen Fehlstellen 46 mit einem Wert 0 vorhanden, bei denen ein ausgesandtes Signal - beispielsweise aufgrund eines sich in den entsprechenden Strahlengängen 32 befindenden Werkstücks - nicht erfasst wurde, und an zwei weiteren Positionen Störsignale 48 mit einem Wert 1 vorhanden, bei denen jeweils ein Störlichtimpuls von den entsprechenden Lichtempfängern 14 anstelle eines erwarteten Wertes O erfasst wurden.

Anschließend wird aus der Lage des Maximums der Korrelationsfunktion die Phasenverschiebung zwischen Empfangsmuster 42 und Referenzmuster 44 berechnet, die für die hier angegebenen Muster 3 Einheiten auf der t-Achse beträgt. Durch die Kenntnis der Phasenverschiebung ist nun die Synchronisation von Empfangsmuster 42 und Referenzmuster 44 möglich, die beispielsweise in der Auswerteeinheit 28 dadurch erfolgen kann, das ein um die ermittelten 3 Einheiten zeitverschobenes Referenzmuster 44 mit dem Empfangsmuster 42 verglichen wird. Wenn bei einem derartigen Vergleich festgestellt wird, dass sowohl Referenzmuster 44 als auch Empfangsmuster 42 den Wert 1 aufweisen, liegt ein Lichtempfang vom jeweils zugeordneten Lichtsender 10 vor, wenn lediglich das Referenzmuster 44 den Wert 1 aufweist, liegt kein derartiger Lichtempfang vor. Somit werden in der Auswerteeinheit 28 für die Erzeugung eines Ausgangssignals zu einem gegebenen Zeitpunkt nur die Signale der Lichtempfänger 14 berücksichtigt, deren zugeordnete Lichtsender 10 zu diesem Zeitpunkt aktiv sind.

### Bezugszeichenliste

- 10: Lichtsender
- 12: Sendeeinheit
- 14: Lichtempfänger
- 16: Empfangseinheit
- 18: Sendetaktgenerator
- 20: Sendemustergenerator
- 22: Referenztaktgenerator
- 24: Referenzmustergenerator
- 28: Auswerteeinheit
- 30: Überwachungsbereich
- 32: Strahlengang
- 40: Sendemuster
- 42: Empfangsmuster
- 44: Referenzmuster
- 46: Fehlstelle
- 48: Störsignal

## Patentansprüche

1. Verfahren zur störungsfreien Synchronisation von Lichtempfängern und Lichtsendern eines Lichtgitters mit mehreren nebeneinander angeordneten Lichtsendern (10) und mehreren nebeneinander angeordneten Lichtempfängern (14), wobei je ein Lichtsender (10) und je ein Lichtempfänger (14) einander zugeordnet sind und die Lichtsender (10) zur Abgabe von Lichtimpulsen in einer Reihenfolge, die durch ein Sendemuster (40) vorgegeben ist, aktiviert werden,
**dadurch gekennzeichnet,**
**dass** bei einem einzelnen Synchronisationsvorgang ein von N Licht-empfängern (14) geliefertes, aus mehr als einem Empfangssignal bestehendes Empfangsmuster (42) mit einem Referenzmuster (44), das gleich dem Sendemuster (40) der den N Lichtempfängern (14) zugeordneten Lichtsender (10) ist oder von diesem Sendemuster (40) abgeleitet ist, korreliert und aus dem Ergebnis dieser Korrelation die Phasenverschiebung zwischen Referenzmuster (44) und Empfangsmuster (42) berechnet wird.

2. Verfahren nach Anspruch 1,
**dadurch gekennzeichnet,**
**dass** mittels der Phasenverschiebung ein Zeitpunkt ermittelt wird, zu dem ein einem bestimmten Lichtempfänger (14) zugeordneter Lichtsender (10) aktiv ist.

3. Verfahren nach einem der vorhergehenden Ansprüche,
**dadurch gekennzeichnet,**
**dass** die N Lichtempfänger (14) nacheinander abgetastet werden.

4. Verfahren nach Anspruch 3,
**dadurch gekennzeichnet,**
**dass** eine Abtastrate für die Lichtempfänger (14) erzeugt wird, die zumindest ein Vielfaches, insbesondere ein N-faches, einer Sendeimpulsrate beträgt.

5. Verfahren nach Anspruch 1 oder 2,
**dadurch gekennzeichnet,**
**dass** mehrere, insbesondere alle, der N Lichtempfänger (14) gleichzeitig abgetastet werden, wobei insbesondere eine Abtastrate für die Lichtempfänger (14) erzeugt wird, die gleich einer Sendeimpulsrate ist.

6. Verfahren nach einem der vorhergehenden Ansprüche,
**dadurch gekennzeichnet,**
**dass** eine Abtastrate und eine Sendeimpulsrate aus einer jeweils gleichen Taktfrequenz erzeugt werden.

7. Verfahren nach einem der vorhergehenden Ansprüche,
**dadurch gekennzeichnet,**
**dass** Empfangsmuster (42) und Referenzmuster (44) kontinuierlich, insbesondere für jeden die N Lichtempfänger (14) umfassenden Taktzyklus, korreliert und deren Phasenverschiebung berechnet werden.

8. Verfahren nach einem der vorhergehenden Ansprüche,
**dadurch gekennzeichnet,**
**dass** als Sendemuster (40), Referenzmuster (44) und Empfangsmuster (42) jeweils zweidimensionale Muster eingesetzt werden, wobei als erste Dimension die Zeit und als zweite Dimension eine Ordnungsnummer der für die Korrelationsfunktion herangezogenen N Lichtsender (10) bzw. N Lichtempfänger (14) verwendet werden.

9. Lichtgitter mit mehreren nebeneinander angeordneten Lichtsendern (10) und mehreren nebeneinander angeordneten Lichtempfängern (14), wobei je ein Lichtsender (10) und je ein Lichtempfänger (14) einander zugeordnet sind und die Lichtsender (10) zur Abgabe von Lichtimpulsen in einer Reihenfolge, die durch ein Sendemuster (40) vorgegeben ist, aktivierbar sind,
**dadurch gekennzeichnet,**
**dass** zur störungsfreien Synchronisation von Lichtsendern (10) und Lichtempfängern (12) mittels einer Auswerteeinheit bei einem einzelnen Synchronisationsvorgang ein von N Lichtempfängern (14) geliefertes, aus mehr als einem Empfangssignal bestehendes Empfangsmuster (42) mit einem Referenzmuster (44), das gleich dem Sendemuster (40) der den N Lichtempfängern (14) zugeordneten Lichtsendern (10) ist oder von diesem Sendemuster (40) ableitbar ist, korrelierbar und aus dem Ergebnis dieser Korrelation die Phasenverschiebung zwischen Referenzmuster (44) und Empfangsmuster (42) berechenbar ist.

10. Lichtgitter nach Anspruch 9
**dadurch gekennzeichnet,**
**dass** eine einzelne Auswerteeinheit (28) zur Verarbeitung der Signale aller Lichtempfänger (14) vorgesehen ist, die insbesondere als eine Vorrichtung zur Bildverarbeitung ausgebildet ist.

## Claims

1. A method for the interference-free synchronization of light receivers and light transmitters of a light grid having a plurality of light transmitters (10) arranged next to one another and having a plurality of light receivers (14) arranged next to one another, wherein one respective light transmitter (10) and one respective light receiver (14) are associated with each other and the light transmitters (10) are activated to output light pulses in a sequence which is predefined by a transmission pattern (40),
**characterised in that**,
on a single synchronisation process, a reception pattern (42) delivered by N light receivers (14) and comprising more than one reception signal is correlated with a reference pattern (44) which is the same as the transmission pattern (40) of the light transmitters (10) associated with the N light receivers (14) or is derived from this transmission pattern (40) and the phase shift between the reference pattern (44) and the reception pattern (42) is calculated from the result of this correlation.

2. A method in accordance with claim 1,
**characterised in that**
a time is determined by means of the phase shift at which a light transmitter (10) associated with a specific light transmitter (14) is active.

3. A method in accordance with one of the preceding claims,
**characterised in that**
the N light receivers (14) are scanned after one another.

4. A method in accordance with claim 3,
**characterised in that**
a scanning rate is generated for the light receivers (14) which amounts to at least a multiple of, in particular N-fold, a transmission pulse rate.

5. A method in accordance with claim 1 or claim 2,
**characterised in that**
a plurality of the N light receivers (14), in particular all the N light receivers, are scanned simultaneously, with in particular a scanning rate for the light receivers (14) being generated which is the same as a transmission pulse rate.

6. A method in accordance with any one of the preceding claims,
**characterised in that**
a scanning range and a transmission pulse rate are generated from a clock frequency which is respectively the same.

7. A method in accordance with any one of the preceding claims,
**characterised in that**
the reception pattern (42) and the reference pattern (44) are correlated continuously, in particular for each clock cycle including the N light receivers (14), and their phase shifts are calculated.

8. A method in accordance with any one of the preceding claims,
**characterised in that**
respective two-dimensional patterns are used as the transmission pattern (40), the reference pattern (44) and the reception pattern (42), with the time being used as the first dimension and a serial number of the N light transmitters (10) or N light receivers (14) used for the correlation function being used as the second dimension.

9. A light grid having a plurality of light transmitters (10) arranged next to one another and having a plurality of light receivers (14) arranged next to one another, wherein one respective light transmitter (10) and one respective light receiver (14) are associated with each other and the light transmitters (10) can be activated to output light pulses in an order which is predefined by a transmission pattern (40),
**characterised in that**
for an interference-free synchronisation of light transmitters (10) and light receivers (12) by means of an evaluation unit on a single synchronisation process, a reception pattern (42) delivered by N light receivers (14) and comprising more than one reception signal is correlated with a reference pattern (44) which is the same as the transmission pattern (40) of the light transmitters (10) associated with the N light receivers (10) or is derived from this transmission pattern (40) and the phase shift between the reference pattern (44) and the reception pattern (42) can be calculated from the result of this correlation.

10. A light grid in accordance with claim 9,
**characterised in that**
a single evaluation unit (28) is provided for processing the signals of all light receivers (14) which is in particular configured as an apparatus for image processing.

## Revendications

1. Procédé pour la synchronisation sans perturbation de récepteurs de lumière et d'émetteurs de lumière d'une barrière lumineuse comprenant plusieurs émetteurs de lumière (10) agencés les uns à côté des autres et plusieurs récepteurs de lumière (14) agencés les uns à côté des autres, dans lequel un émetteur de lumière respectif (10) et un récepteur de lumière respectif (14) sont associés l'un à l'autre, et les émetteurs de lumière (10) sont activés pour fournir des impulsions de lumière dans une succession qui est imposée par un motif d'émission (40),
**caractérisé en ce que**
lors d'une opération de synchronisation unique, un motif de réception (42) fourni par N récepteurs de lumière (14) et constitué de plus d'un signal de réception est mis en corrélation avec un motif de référence (44), qui est égal au motif d'émission (40) des émetteurs de lumière (10) associés aux N récepteurs de lumière (14), ou est dérivé de ce motif d'émission (40) et, à partir du résultat de cette corrélation, on calcule le décalage de phase entre le motif de référence (44) et le motif de réception (42)

2. Procédé selon la revendication 1,
**caractérisé en ce que**, au moyen du décalage de phase, on détermine un instant auquel un émetteur de lumière (10) associé à un récepteur de lumière (14) déterminé est actif.

3. Procédé selon l'une des revendications précédentes,
**caractérisé en ce que** les N récepteurs de lumière (14) sont palpés les uns après les autres.

4. Procédé selon la revendication 3,
**caractérisé en ce que** l'on produit une cadence de palpage pour les récepteurs de lumière (14) qui est au moins un multiple, et en particulier N fois une cadence d'impulsions d'émission.

5. Procédé selon la revendication 1 ou 2,
**caractérisé en ce que** l'on palpe simultanément plusieurs des N récepteurs de lumière (14), en particulier tous, et on produit en particulier une cadence de palpage pour les récepteurs de lumière (14) qui est égale à une cadence d'impulsions d'émission.

6. Procédé selon l'une des revendications précédentes,
**caractérisé en ce que** l'on produit une cadence de palpage et une cadence d'impulsions d'émission à partir d'une fréquence de cadence respectivement égale.

7. Procédé selon l'une des revendications précédentes,
**caractérisé en ce que** le motif de réception (42) et le motif de référence (44) sont mis continuellement en corrélation, en particulier pour chaque cycle qui englobe les N récepteurs de lumière (14), et on calcule leur décalage de phase.

8. Procédé selon l'une des revendications précédentes,
**caractérisé en ce que** l'on emploie à titre de motif d'émission (40), de motif de référence (44) et de motif de réception (42) à chaque fois des motifs bidimensionnels, dans lesquels on utilise comme première dimension le temps et comme seconde dimension un numéro d'ordre des N émetteurs de lumière (10) ou des N récepteurs de lumière (14) mis à contribution pour la fonction de corrélation.

9. Barrière lumineuse comprenant plusieurs émetteurs de lumière (10) agencés les uns à côté des autres et plusieurs récepteurs de lumière (14) agencés les uns à côté des autres, dans lequel un émetteur de lumière respectif (10) et un récepteur de lumière respectif (14) sont associés l'un à l'autre, et les émetteurs de lumière (10) sont activés pour fournir des impulsions de lumière dans une succession qui est imposée par un motif d'émission (40),
**caractérisée en ce que**
pour la synchronisation sans perturbation des émetteurs de lumière (10) et des récepteurs de lumière (12), lors d'une opération de synchronisation unique, un motif de réception (42) fourni par N récepteurs de lumière (14) et constitué de plus d'un signal de réception, peut être mis en corrélation au moyen d'une unité d'évaluation avec un motif de référence (44), qui est égal au motif d'émission (44) des émetteurs de lumière (10) associés aux N récepteurs de lumière (14), ou qui peut être dérivé de ce motif d'émission (40) et, à partir du résultat de cette corrélation, le décalage de phase entre le motif de référence (44) et le motif de réception (42) peut être calculé.

10. Barrière lumineuse selon la revendication 9,
**caractérisée en ce qu'**il est prévu une unique unité d'évaluation (28) pour le traitement des signaux de tous les récepteurs de lumière (14), unité qui est en particulier réalisée comme un dispositif de traitement d'images.
